# EUROPEAN PATENT APPLICATION

(11) **EP 3 133 849 A1**
(43) Date of publication of application: **22.02.2017**
(21) Application number: 15306304.5
(22) Date of filing: 21.08.2015
(51) Int. Cl.: H04W 8/18, H04W 8/20

(54) **METHOD, TOKEN AND SYSTEM FOR SWITCHING FROM A FIRST TO A SECOND MOBILE OPERATOR ACCORDING TO A NETWORK ACCESS TECHNOLOGY**

(71) Applicant: GEMALTO SA, 92190 Meudon (FR)
(72) Inventor: CORRADINO, David, 13881 GEMENOS Cedex (FR)
(74) Representative: Scheer, Luc

(57) **Abstract**

The invention relates to a method 20 for switching from a first to a second mobile network operator.

According to the invention, a device 14 cooperates with a token 12. The token stores a first subscription relating to a first mobile network operator. The token stores at least one second subscription relating, each, to a second mobile network operator. Each of the at least one second subscription is associated with a preferred network access technology. The method comprises the following steps. The device sends, on an initiative of the device, to the token a first message 22) ncluding a currently available network access technology. The token determines, based upon the first message, the currently available network access technology. The token compares the currently available network access technology to at least one preferred network access technology. If the currently available network access technology matches at least one preferred network access technology relating to a second mobile network, then the token switches 25 to a second subscription associated with the preferred network access technology. The second subscription is related to a corresponding second mobile network operator. And the token sends to the device at least one identifier 28 relating to the second subscription.

The invention also relates to corresponding token 12 and system 10.

## Description

### Field of the invention:

The invention relates generally to a method for switching from a first to a second mobile network operator.

Moreover, the invention relates to a token, as a device, for switching from a first to a second mobile network operator.

The present invention is notably applicable to a mobile radio-communication field wherein a chip may be embedded, such as an embedded Universal Integrated Circuit Card (or eUICC), within or removable, such as a chip included within a smart card termed Subscriber Identity Module (or SIM) type card or the like, as a Secure Element (or SE), from a chip host device.

Within the present description, an SE or a token is a smart device (or object) that includes a chip that protects access to stored data and is intended to communicate data with the outside world, like e.g. a mobile (tele)phone, as an SE host device.

### State of the art:

When roaming, a mobile phone goes from a home to a neighbour (mobile communication) network cell that is located in a foreign country, the phone checks, within a file relating to Public Land Mobile Networks (or PLMNs) that are listed in a priority order, which network for the foreign country is a preferred network. Then, the phone selects, based on the PLMN file stored within an SE chip, and connects to the associated preferred network if this latter is available.

However, such a known solution uses an SE that forces the phone to use a network (radio-communication) access technology that is associated with the preferred network as listed, independently of any available network access technology(ies).

Thus, there is a need to access, when a preferred network access technology is available, a corresponding mobile network.

### Summary of the invention:

The invention proposes a solution for satisfying the just hereinabove specified need by providing a method for switching from a first to a second mobile network operator.

According to the invention, a device cooperates with a token. The token stores a first subscription relating to a first mobile network operator. The token stores at least one second subscription relating, each, to a second mobile network operator. Each of the at least one second subscription is associated with a preferred network access technology. The method comprises the following steps. The device sends, on an initiative of the device, to the token a first message including a currently available network access technology. The token determines, based upon the first message, the currently available network access technology. The token compares the currently available network access technology to at least one preferred network access technology. If the currently available network access technology matches at least one preferred network access technology relating to a second mobile network, then the token switches to a second subscription associated with the preferred network access technology. The second subscription is related to a corresponding second mobile network operator. And the token sends to the device at least one identifier relating to the second subscription.

The principle of the invention consists in that an SE using a subscription discovers, further to a reception, from a device, as a master, of a currently available network access technology, as a preferred one, then forces the device to switch to another subscription associated with the preferred network access technology.

It is to be noted that the preferred network access technology may be comprised within an ordered priority list of one or several preferred network access technologies.

It is noteworthy that the device plays a role of a master device while the SE plays a role of a slave device, so as to receive at the SE the currently available network access technology. Thus, as soon as the device is aware of an availability of a network access technology, the device immediately informs the SE about such a network access technology. Contrary to a solution in which a proactive SE has to request from the device a currently available network access technology, the invention solution based on a proactive device is quicker and more efficient with respect to a solution based on a proactive SE to launch a switch to a corresponding subscription at the device side.

In contrast, once the SE has discovered a presence of a preferred network access technology, the SE forces, on its own initiative, the device to switch (or swap) to another subscription associated with the discovered preferred network access technology.

A device that interacts with the SE is then forced to use a preferred network access technology that is associated with a subscription to be activated instead of a network access technology associated with a currently active subscription at the device (and the token)).

The preferred network access technology may be a second (or 2G), a third (or 3G), a fourth (or 4G) or a fifth (or 5G) (or beyond) type generation (mobile radio) communication technology.

The preferred network access technology may allow accessing an enhanced Quality of Service (or QoS), an enhanced data debit rate, as a technical criterion(criteria) and/or any other non-technical criterion(criteria), as a criterion(criteria) that is(are) used for building an ordered list of one or several preferred network access technologies.

The invention solution allows addressing an available network access technology that is registered at the SE side as a preferred network access technology by switching from a first to a corresponding second subscription.

The invention solution allows accessing a preferred network access technology and therefore an additional granularity level with respect to the aforementioned prior art solution.

The invention solution allows benefiting, through a preferred network access technology, from an additional flexibility to access a corresponding mobile network.

The invention method allows switching statically, i.e. when present within a home or foreign country during a boot of the SE, or dynamically, i.e. when roaming, to a second subscription. The second subscription is accessible, through a Mobile Network Operator (or MNO) or a Mobile Network Virtual Operator (or MVNO), as a second operator that has a roaming agreement with a first operator.

The invention method may be automatically implemented. Thus, a subscriber to a first mobile network, as a user of the SE that implements the invention method, is not involved to switch to a second subscription relating to a second operator.

The invention method is therefore convenient for the subscriber to a concerned first operator.

According to an additional aspect, the invention is a token for switching from a first to a second mobile network operator.

According to the invention,the token is likely to cooperate with a device. The token comprises means for storing a first subscription relating to a first mobile network operator. The token comprises means for storing at least one second subscription relating, each, to a second mobile network operator. Each of the at least one second subscription is associated with a preferred network access technology. The token is configured to receive, on an initiative of the device, a first message including a currently available network access technology. The token is configured to determine, based upon the first message, the currently available network access technology. The token is configured to compare the currently available network access technology to at least one preferred network access technology. The token is configured to switch, if the currently available network access technology matches at least one preferred network access technology relating to a second mobile network, to a second subscription associated with the preferred network access technology. The second subscription is related to a corresponding second mobile network operator. And the token is configured to send to the device at least one identifier relating to the second subscription.

The token may be fixed to or removable from the device.

Instead of a token, it may be another device with data processing means, data storing means and one or several Input/Output (or I/O) interfaces.

The invention does not impose any constraint as to a kind of the token or SE type.

As a removable SE, it may be a SIM type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled or connected to a host device, as a device.

According to still an additional aspect, the invention is a system for switching from a first to a second mobile network operator.

According to the invention, the system comprises a device and a token. The token cooperates with the device. The token comprises means for storing a first subscription relating to a first mobile network operator, the token comprising means for storing at least one second subscription relating, each, to a second mobile network operator. Each of the at least one second subscription is associated with a preferred network access technology. The token is configured to receive, on an initiative of the device, a first message including a currently available network access technology. The token is configured to determine, based upon the first message, the currently available network access technology. The token is configured to compare the currently available network access technology to at least one preferred network access technology. The token is configured to switch, if the currently available network access technology matches at least one preferred network access technology relating to a second mobile network, to a second subscription associated with the preferred network access technology. The second subscription is related to a corresponding second mobile network operator. And the token is configured to send to the device at least one identifier relating to the second subscription.

### Brief description of the drawings:

Additional features and advantages of the invention will be more clearly understandable after reading a detailed description of one preferred embodiment of the invention, given as one indicative and non-limitative example, in conjunction with the following drawings:

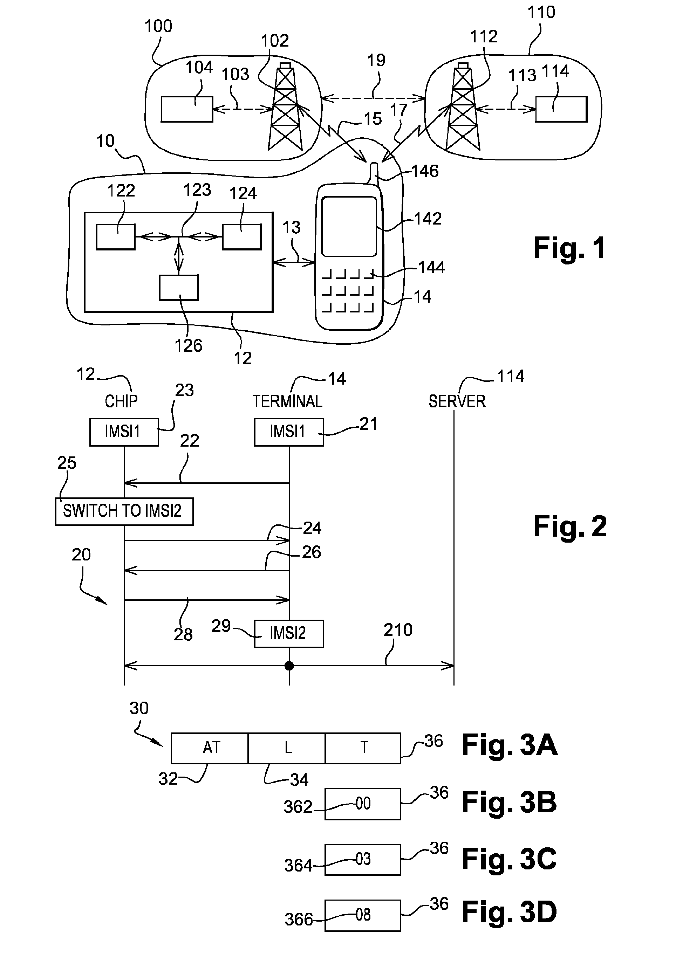

- Figure 1 is a simplified diagram of a first and a second mobile network and one exemplary embodiment of a terminal equipment, the terminal equipment being internally arranged to switch from a first subscription relating to a first operator to a second subscription associated with a currently detected network access technology, as a registered preferred network access technology relating to a second operator, according to the invention;
- Figure 2 illustrates an example of a flow of messages exchanged between an authentication server relating to the second mobile network and the different entities of the terminal equipment of figure 1, so that an SE, once informed by the terminal about a currently detected network access technology, forces, based on an onboard registered preferred network access technology(ies), the terminal to attach to a corresponding second mobile network by using the second subscription instead of the first subscription;
- Figure 3A represents data fields comprised within an ENvelope (EVent Download-Access Technology Change) (or EN (EV D-ATC)) type command originating from the terminal, as a master device, and addressed to the SE, to detect by the SE a currently available network access technology; and
- Figure 3B, 3C and 3D are predefined first, second and third values of a Technology (or T), as a data field comprised within the figure 3A EN (EV D-ATC) type command, to be detected when the currently detected network access technology is a 2G, 3G and 4G type network access technology respectively.

### Detailed description:

Herein under is considered a case in which the invention method for switching from a first to a second (mobile network) operator is implemented by a mobile phone, as a user terminal and an SE host device, and a chip carried by a card, as an SE or token medium.

Alternately, instead of being carried by a card, as a chip medium, the chip may be an embedded chip, like e.g. a eUICC, as a chip soldered, possibly in a removable manner, on a Printed Circuit Board (or PCB) of a terminal, or a Trusted Execution Environment (or TEE), as a token and a secure area of a terminal (micro)processor and a secured runtime environment.

The token or SE may have different form factors.

Instead of being carried by a card, the chip may be carried by another medium, such as a dongle, like e.g. a USB type dongle.

According to another embodiment (not represented), the invention method for switching from a first to a second operator is implemented by a device, as a standalone entity, at a client side. In other words, the device, like e.g. a mobile terminal, does not cooperate with any SE, so as to switch from a first to a second subscription according to a network access technology aspect. According to such an embodiment (not represented), the device is adapted to carry out the functions that are described infra and that are carried out by the SE and its host terminal. Thus, a mobile terminal may support an invention subscription switch application that is stored in a non-trusted environment (instead of a trusted environment by using an SE).

Naturally, the herein below described embodiment is only for exemplifying purposes and is not considered to reduce the scope of the present invention.

**Figure 1** shows schematically a terminal equipment 10 that is firstly connected to a first mobile network 100 by using a first subscription and that is also, under radio coverage of a second mobile network 110 to be connected, by using a second subscription after a subscription switch based on a network access technology aspect.

The terminal equipment 10, as a system for switching from a first to a second mobile operator, comprises a token with a chip 12 and a mobile phone 14, as a user terminal.

Instead of a phone, the user terminal or the terminal may be any other device including a (micro)processor(s), as means for processing data, comprising or being connected to wireless communication means for exchanging data with outside, and comprising or being connected to a memory(ies), as means for storing data.

Within the present description, the adjective "wireless" used within the expression "wireless communication means" denotes notably that the communication means communicates via one or several Long Range (or LR) Radio-Frequency (or RF) links.

The LR RF may be fixed at several hundreds of MHz around e.g. 850, 900, 1800, 1900 and/or 2100 MHz.

The user terminal (or a machine in a Machine to Machine (or M2M) context or a terminal) may be either fixed (i.e. not mobile) or mobile.

The (user) terminal may be a Personal Digital Assistant (or PDA), a vehicle, a set-top box, a tablet computer, a Personal Computer (or PC), a desktop computer, a laptop computer, a video player, an audio player, a portable TeleVision (or TV), a media-player, a game console, a netbook and/or any kind of electronic device that is able to exchange data by using different subscriptions and corresponding mobile network(s).

For clarity reason, the mobile phone 14, the first mobile network 100 and the second mobile network 110 are termed infra the phone 14, the first network 100 and the second network 110 respectively.

The phone 14 is preferably used for accessing two (or more) mobile networks, namely the first 100 and the second 110 network.

The phone 14 is connected, i.e. identified and preferably authenticated, to the first network 100.

The first 100 and second 110 networks, as cellular networks, may be each constituted by a Global System for Mobile Communications (or GSM), a General Packet Radio Service (or GPRS), a Universal Mobile Telecommunications System (or UMTS), an EDGE (acronym for "Enhanced Data rates for GSM Evolution"), a Code Division Multiple Access (or CDMA) and/or a Long Term Evolution (or LTE) type network(s).

Such a cellular network set is not exhaustive but only for exemplifying purposes.

The first network 100 uses a first network access technology, so as to exchange with an RF enabled device, like e.g. the phone 14.

The first network 100 may be related to a home country and/or a foreign country.

The first network 100 includes a first base station 102 (or the like) that is used for communicating, over a first RF link 15, with an RF enabled device, like e.g. the phone 14.

The first network 100 is operated by at least one first operator, like e.g. an MNO or an MVNO, as an MNO1.

The first network 100 covers, through the first base station 102, at least in part a geographical area in which the phone 14 is currently situated.

The first network 100 includes a first network authentication server, as a first (remote) server 104.

The first server 104 is operated by the first operator MNO1.

The first server 104 is connected indirectly through internal network links 103 to the first base station 102.

The first network 100 may be connected, through a bi-directional wired link 19, to the second network 110.

The second network 110 uses a second network access technology, so as to exchange with an RF enabled device, like e.g. the phone 14.

The second network access technology may be identical to or separate from the first network access technology.

The second network 110 may be the first network 100 or separate from the first network 100.

The second network 110 may be related at least in part to the home country and/or one or several foreign countries. Among the foreign countries, there are one or several foreign countries that may be commonly covered at least in part by the first 100 and second 110 networks.

The second network 110 includes a second base station 112 (or the like) that may be used for communicating, over a second RF link 17, with an RF enabled device, like e.g. the phone 14.

The second network 110 covers, through the second base station 112, at least in part a geographical area in which the phone 14 is currently situated.

The second network 110 is operated by at least one second mobile operator, like e.g. an MNO or an MVNO, as an MNO2, as a service provider or on its behalf.

The second operator may be the first operator or separate from the first operator.

When there are two different operators, they should have signed an agreement. The agreement allows a subscriber to the first operator to access, according to a network access technology aspect, after a subscription switch, the second network 110 relating to the second operator MNO2 preferably in some predetermined locations, like e.g. a country or one or several predefined identified cells of a country. To access the second network 110, the chip 12 imposes to select a corresponding second subscription when present in a covered place where the phone 14 is currently located.

A subscriber to the first operator MNO1 is thus able to communicate data by using, instead of a first subscription, a (preferred) second subscription that allows, according to a network access technology aspect, accessing the second network 110 relating to the second operator MNO2. The agreement may be mutual, i.e. the agreement also allows, according to a network access technology aspect, a subscriber to the second operator MNO2 to benefit, by using, instead of the second subscription, the first subscription, from an access to the first network 100 relating to the first operator MNO1.

The second network 110 includes a second network authentication server, as a second (remote) server 114.

The second server 114 is connected indirectly through internal network links 113 to the second base station 112.

The second server 114 is identified by a Uniform Resource Identifier (or URI), such as a Uniform Resource Locator (or URL), an Internet Protocol (or IP) address and/or the like, as a server identifier(s).

The server identifier may be stored within the chip 12 and/or the phone 14.

The second server 114 is hosted by a computer.

The second server 114 is dedicated to running an application for managing a database and communicating data of the database to outside.

The second server 114 includes preferably a memory (not represented) that stores the database.

Instead of an internal memory, the second server 114 is connected to an external memory (not represented) storing the database.

The database includes a set of one (or several) identifier(s) relating, each, to a second subscription and a corresponding network authentication key Ki.

The second server 114 is used for identifying and preferably authenticating notably the second subscription IMSI2.

Alternately, another server (not represented) that is connected to the second server 114 manages the database.

The phone 14 includes preferably a display screen 142 and a keyboard 144, as a phone Man Machine Interface (or MMI).

Alternatively, instead of a physical keyboard separated from the display screen, the phone 14 is equipped with a touch sensitive display screen, as a virtual keyboard.

The phone MMI allows a phone user to interact with the phone 14.

The phone 14, as an RF enabled device, comprises an antenna 146. The antenna 146 allows communicating data, through two LR RF links 15 and 17, in a consecutive manner, with two (or more) mobile networks 100 and 110 respectively.

The phone 14 includes one or several (micro)processors (not represented), as data processing means, one or several memories, as data storing means (not represented), and one or several I/O interfaces (not represented) that are linked all together through a control and data bus (not represented).

The phone 14 plays, in a preferential manner, a role of a modulator-demodulator (or modem), so as to exchange data, over one or several LR RF links, with the two (or more) mobile networks 100 and 110.

The phone 14 carries out the following operations:
- a modulation of an analogical carrier signal to encode digital information to be transmitted, over the antenna 146, to the first 104 and second 114 servers, and
- a demodulation of a received analogical carrier signal to decode encoded digital information that is received, over the antenna 146, from the first 104 and second 114 servers.

The phone memory(ies) may comprise one or several volatile memories and/or one or several non-volatile memories. The phone memory(ies) may include, as a volatile memory, at least one cache memory.

A phone memory, be it either a volatile or non-volatile memory, stores, at least in a temporary manner, data relating to one subscription, namely, before a subscription switch, the first subscription and, after the subscription switch as further explained, the second subscription, which the phone 14 has to receive from the chip 12.

Thus, before a subscription switch, only the first subscription is active at the phone 14, and, once the subscription switch is performed at the chip 12, the phone 14 receives the second subscription to replace the first subscription and to be activated.

The phone memory(ies) store(s) an Operating System (or OS) and one or several applications.

The phone 14, as a chip host device, is coupled or connected to the chip 12, so as to cooperate with the chip 12 to switch to the second subscription.

Alternately, the phone 14 comprises the chip 12 that is soldered, i.e. fixed, possibly in a removable manner, to the PCB of the phone 14.

The phone I/O interfaces include one or several I/O interfaces for exchanging data with the chip 12, as a token chip removable from the phone 14.

The phone I/O interface(s) with the chip 12 may be an International Organization for Standardization (or ISO) 7816 and/or USB type interface(s), as a contact interface(s), when the chip 12 is inserted, in a removable manner, in the phone 14.

Alternately, instead of a contact interface(s), the phone I/O interface with the chip 12 is connected to or includes a contact-less interface. The phone 14 is connected to or includes means for communicating data while using preferably a Short Range (or SR) RF link. The SR RF link may be related to any technology that allows the phone 14 to exchange data, through a so-termed contact-less link, with the chip 12. The SR RF may be fixed at 13,56 MHz and related to a Near Field Communication (or NFC) type technology, as a contact-less technology.

The chip 12 is under a control of the phone 14.

The chip 12 cooperates with the phone 14, so as to be able to exchange data through, firstly, the first network 100 and, secondly, the second network 110 after a subscription switch based on a network access technology aspect.

The chip 12 is preferably associated with or tied to the first server 104.

The chip 12 belongs to a user, as a subscriber to the first operator MNO1, so as to benefit from one or several wireless services.

The chip 12 is connected or coupled, through a bi-directional link 13, to the phone 14.

The chip 12 includes a (micro)processor(s) 122, as data processing means, a memory(ies) 124, as data storing means, and one or several I/O interfaces 126 that are internally all connected, through an internal bidirectional data bus 123, to each other.

The I/O interface(s) 126 allow(s) communicating data from the internal chip 12 components to the chip exterior and conversely.

The processor 122 processes, controls and communicates internally data with all the other components incorporated within the chip 12 and, through the I/O interface(s) 126, with the chip exterior.

The processor 122 executes or runs one or several applications.

The processor 122 performs, in a preferred manner, one or several security functions.

The security functions include preferably a user authentication process to be used prior to continuing to access the memory 124, notably at a boot and/or a re-boot of the chip 12. To authenticate the user, the user has to provide a Personal Identification Number (or PIN) and/or biometric data, as user reference data to be matched, that is stored, preferably in a secure manner, in the memory 124. As biometric data, it may include one or several fingerprints, one or several iris prints and/or one or several voiceprints relating to one or several authorized users.

The processor 122 is preferably able to initiate actions, in order to interact directly with the outside world, in an independent manner of the phone 14, as a chip host device. Such a capacity of interaction at the initiative of the chip 12 is also known as being a proactive capacity. According to one preferred embodiment, the chip 12 is able to use SIM ToolKit (or STK) type commands, as proactive commands.

The memory 124 stores an OS.

The memory 124 stores preferably one or several Subscriber Identity Module (or SIM) type applications.

The SIM type application(s) allow(s) the phone 14 to identify and authenticate to the first 100 and second 110 networks and, more exactly, the first 104 and the second 114 server.

Among the supported applications, the memory 124 stores an invention application termed subscription manager that the processor 122 executes.

The memory 124 stores preferably data relating to a URI, a URL and/or an IP address(es) of one or several external entities to be addressed, like e.g. the first 104 and the second 114 server.

The memory 124 stores preferably a plurality of sets of data relating, each, to a subscription, such as a subscription to one or several wireless services. Among the subscription data set plurality, there are a first subscription data set relating to the first network 100 and at least one second subscription data set relating to the second network 110.

Each subscription data set may include:
- an International Mobile Subscriber Identity (or IMSI), as an identifier that allows identifying a subscriber for accessing a mobile network;
- a key Ki, as a network authentication key, allowing to authenticate the subscriber to the mobile network and more exactly to a network authentication server;
- Milenage, as a network authentication algorithm, allowing to authenticate the subscriber to the network authentication server;
- a file system including one or several Elementary Files (or EF);
- one or several security keys, like e.g. a key(s) for encrypting/decrypting data and/or a key(s) for signing data a key(s), as secret data; and/or
- one or several credentials, like e.g. a user name and/or an IDentifier (or ID) of the subscriber, as data relating to the user.

The memory 124 stores, preferably within a first security domain (not represented), as a first memory area, the first subscription data set.

Each subscription data set is identified by an identifier. The first subscription data set IMSI1 relates to the first operator MNO1. The first operator MNO1 is a first home (and/)or foreign (country) operator.

The first subscription data set IMSI1 allows identifying, as subscriber, to the first server 104.

The first subscription data set IMSI1 comprises a first key K1 that allows authenticating to the first server 104.

The first subscription data set IMSI1 is active, i.e. is in an enabled state, before a subscription switch and is inactive after the subscription switch at the chip 12 side.

The memory 124 also stores, preferably within at least one second security domain (not represented), as at least one second memory area, each other subscription data set, namely the second subscription data set within the second memory area (and so on respectively).

The second memory area is separate from the first memory area.

The second subscription data set IMSI2 relates to the second operator MNO2. The second operator MNO2 is a second home (and/)or foreign (country) operator.

The second subscription data set IMSI2 allows identifying, as subscriber, to the second server 114.

The second subscription data set IMSI2 comprises a second key K2 that allows authenticating to the second server 114.

The second subscription data set IMSI2 is inactive, i.e. in a disabled state, before a subscription switch.

The second subscription data set IMSI2 will be active after the subscription switch at, firstly, the chip 12 and then the phone 14.

Alternately, instead of addressing the second server 114, as an authenticator of the subscriber, the second network 110 may re-direct a corresponding received network authentication request to the first server 104. According to such an embodiment, the subscription data sets IMSI1 and IMSI2 include different IMSIs but share one and the same network authentication key, namely the first Ki1.

According to an essential feature of the invention, the chip 12 is arranged to switch from a first to a second subscription, according to a network access technology aspect, like e.g. when a value relating to a current available network access technology matches a predetermined value.

The subscription manager allows carrying out a subscription switch at the chip 12 side, so as to use data relating to the second subscription to be activated, as a subscription associated with a predetermined (preferred) network access technology. The subscription manager allows ensuring to switch from a connection to the first network 100 to a connection to the second network 110 without involving preferably the terminal user, except for a possible user authentication.

Such a subscription switch allows de-activating the first subscription, as a currently active subscription, and then activating a second subscription, as a currently non-active subscription to be activated.

The memory 124 stores data relating to a correspondence table that includes, for a given geographical place, like e.g. a predetermined country A and/or precise geographical positions (like e.g. cells and/or GPS points), a plurality of subscription data sets that are, each, associated with a preferred network AT, a (mobile network) operator and a network.

The correspondence table is previously provisioned to the chip 12, either during its manufacturing or, after its issuance, from a remote server or a local terminal, such as a PC.

The country A may be a home or a foreign country, as the country where the phone 14 has to be present for a subscription switch depending on a predetermined network access technology value.

One or several predefined cells and/or precise geographical positions may be additionally used for locating or situating more precisely the phone 14 where this latter has to be present, as a further condition that may have to be satisfied, so as to switch to a second subscription.

The correspondence table may list, in a priority order, preferred subscription data sets, among which only one subscription data set is to be selected and used for a subscription switch.

The priority order may be determined in accordance with an enhanced QoS, an enhanced data debit rate, as a technical criterion(criteria) and/or any other non-technical criterion(criteria), as a criterion(criteria) that is(are) used for building the ordered list of one or several preferred subscription data sets.

The subscription switch occurs based on a network access technology aspect.

The subscription switch is to be carried out when e.g. one of an ordered list of predetermined values relating to network access technologies is identified, i.e. determined, for a given country A.

For instance, a correspondence table that is configurable is as follows:

| Country | network Access Technology (or AT) | Subscription (data set) to be activated | MNO or MVNO | Network |
|---|---|---|---|---|
| A | 4^{th} Generation (or 4G) | IMSI2 | MNO2 | Second network |
| A | 3^{rd} Generation (or 3G) | IMSI3 | MNO3 | Third network |
| A | 2^{nd} Generation (or 2G) | IMSI1 | MNO1 | First network |

For a given geographical place, one corresponding subscription data set is present within such a preferred subscription data set list for a given network AT value. Instead of only one subscription data set, several subscription data sets that are ordered, in a descending order, with respect to their relative priority within a preferred subscription data set list are present for at least one of all the network AT values. Thus, if, further to a first switch to the subscription data set of the highest level within the ordered list of subscription data sets, an issue (like e.g. a connection to a corresponding mobile network has failed) occurs, then a second switch (and possibly a further switch(es)) to the subscription data set that follows in the priority order in the ordered list is performed.

The correspondence table contains, in this example, for a given country A, only three subscription data sets namely:
- a first subscription data set IMSI1, as the lowest priority level or third highest priority level. The first subscription data set IMSI1 is associated with a first predefined network AT value, namely equating to a 2G type network access technology, the first operator MNO1 and the first network 100;
- a second subscription data set IMSI2, as the first highest priority level. The second subscription data set IMSI2 is associated with a second predefined AT value, namely equating to a 4G type network access technology, a second operator MNO2 and the second network 110; and
- a third subscription data set IMSI3, as the second highest priority level. The third subscription data set IMSI3 is associated with a third predefined AT value, namely equating to a 3G type network access technology, a third operator MNO3 and a third network (not represented).

The invention is still applicable with more than three predefined preferred network AT values with corresponding subscription data sets, in an ordered manner.

For a given geographical location, different preferred network AT values are registered with corresponding subscription data sets, networks and operators, at the client side, within the chip 12.

In the given example, the second subscription data set IMSI2 and the third subscription data set IMSI3 relate both to an operator separate from the first operator MNO1, namely the second MNO2 and the third MNO3 operator respectively.

To perform a subscription switch operation, based on a network AT aspect, the chip 12 is adapted to determine a currently available network AT.

To detect a value relating to the currently available network AT, the chip 12 is preferably able to receive, on an initiative of the phone 14, as a chip host device, a command, like e.g. a "Envelope (Event Download-Access Technology Change)", as a command for providing the chip 12 with a currently network AT where the phone 14 is currently present.

Such a command to be received by the chip 12 is not previously requested by the chip 12 to its host device by using a proactive command.

Such a command to be received by the chip 12 may trigger a subscription switch if the current network AT matches a registered preferred AT, as a condition for a subscription switch, at the chip 12 side.

The Envelope (Event Download-Access Technology Change) command is compliant with the ETSI standard. Thus, as soon as the phone 14 detects a change in its current network AT, like e.g. the phone 14 is connected to a 2G type network access technology and switches to a 3G or 4G type network access technology, the phone 14 informs the chip 12 that such an event has occurred, as a mechanism to indicate to the chip 12 the current AT that the phone 14 is using.

Such a command, once configured as explained infra, allows the chip 12 to get or determine a value relating to a currently available network AT at the phone 14 side.

Such AT information is further explained in relation with the Figure 3A. The value of the Technology field may equate to e.g. 2G, 3G or 4G type network access technology value, as described infra in relation with Figures 3B, 3C and 3D.

The chip 12 is arranged to recognize the data field relating to the Technology and to identify the current value relating to the (network) access technology. The chip 12 is thus configured to interpret the received data, so as to retrieve and determine the currently available network access technology.

The chip 12 is adapted to compare the currently available network access technology to one or several (reference) preferred network access technologies.

Depending on a comparison result, the chip 12 is adapted to switch, if a condition(s) to be satisfied, like e.g. at least the currently available network access technology matches one or several preferred network access technologies, is(are) satisfied, to another subscription associated with the (possibly highest priority level) preferred network access technology or to keep the first subscription IMSI1 active (i.e. if the condition(s) to be satisfied is(are) not satisfied).

In case of a subscription switch, the targeted subscription relates to a corresponding mobile network and operator.

To switch to the targeted subscription, the chip 12 is adapted to de-activate the first subscription IMSI1, as a currently active subscription, and to activate the concerned second subscription IMSI2 (or IMSI3), as a currently non-active subscription to be activated.

Once internally switched, the chip 12 (that executes the supported invention subscription manager) is able to send to the phone 14 one (or several) identifier(s) relating to the concerned second subscription IMSI2, so as to de-activate the first subscription IMSI1 and to activate the concerned second subscription IMSI2 at the phone 14 side.

Thus, the chip 12 allows the phone 14 to launch an attachment to the second network 110.

**Figure 2** depicts an exemplary embodiment of a message flow 20 that involves the (token) chip 12, the phone 14 and the second server 114.

In the explained example, it is assumed that the phone 14 is located in a predefined country A, like e.g. France, under a radio coverage of the first 100 and second 110 networks.

It is also assumed that the chip 12 has authenticated to the first server 104 by using the first subscription identifier IMSI1 and the associated network authentication key Ki1 of the first subscription data set. The first subscription IMSI1 relates to the first network 100 and the first operator MNO1.

It is also assumed that the chip 12 uses the correspondence table that is stated supra in relation with Figure 1.

Initially, the first subscription IMSI1 is 21 active, before a subscription switch, at the phone 14, i.e. the phone 14 uses e.g. a 2G type network access technology to communicate with the first network 100.

Initially, the first subscription IMSI1 is also 23 active, before a subscription switch, at the chip 12.

As soon as the phone 12 is using a possibly new network access technology, like e.g. after a network access technology change, the phone 14 sends, on an initiative of the phone 14, to the chip 12 a first message 22 including a currently available network access technology, like e.g. an "ENvelope (EVent Download-Access Technology Change) (or EN (EV D-ATC)) type command 22.

Thus, the phone 12 informs immediately and without any delay the chip 12 about a currently available network access technology, i.e. without sending any previous proactive command from the chip 12, i.e. without needing to poll regularly the phone 14 from the chip 12.

The chip 12 determines, based on the received first message 22, the currently available network access technology.

As will be further explained in relation with the figures 3A to 3D, the chip 12 detects, based on the EN (EV D-ATC) type command, a currently available network access technology.

For instance, the currently available network access technology that is thus detected by the chip 12 is of the 4G type.

Once the chip 12 has analysed the received first message 22 and has determined the currently available network access technology, the chip 12 compares the currently available network access technology, like e.g. a 4G type network access technology, to one (or several) preferred network access technology(ies) of the stored correspondence table, as an ordered priority list.

By using the given example, if the currently available network access technology matches at least a preferred network access technology, like e.g. a 4G type network access technology, then the chip 12 switches 25 to a second subscription IMSI2 associated with the preferred network access technology. The second subscription IMSI2 relates to the second network 110 and the second operator MNO2.

To switch to the second subscription IMSI2, the chip 12 de-actives the first subscription data set IMSI1 and activates the second subscription data set IMSI2.

Once the second subscription data set IMSI2 is activated at the token side, the chip 12 sends to the phone 14 e.g. a REFRESH-INIT type proactive command 24, as a request for reading an EF-IMSI2, as a file relating to the concerned second subscription IMSI2.

Such a file reading request allows synchronizing the phone 14 with the chip 12 with respect to the subscription data set that is currently active at the chip 12 side, namely the second subscription data set IMSI2 instead of the previously first subscription data set IMSI1.

Alternatively, instead of a file reading request, the chip 12 sends to the phone 14 a REFRESH-RESET type proactive command, as a request for re-initializing or re-booting the phone 14.

Such a proactive command 24 allows the phone 14 to read all the files stored within the chip memory 124.

Optionally, the chip 12 requests a phone user to authenticate, so as to continue an attachment to the second network 110.

After an optional successful user authentication, the phone 14 sends to the chip 12 a request 26 for getting data relating to a currently active subscription, such as e.g. "Read Binary" defined within the 3GPP TS 51.011.

The chip 12 sends to the phone 14 a message 28, as a request response, including the data relating to the second subscription IMSI2, as the currently active subscription at the token side, namely at least the second subscription IMSI2.

Alternately, without any chip user authentication request, the chip 12 sends to the phone 14 a message 28, as a request response, including the data relating to the second subscription IMSI2, as the currently active subscription at the token side.

Once the data relating to the second subscription IMSI2 is received, the phone 14 updates its memory (like e.g. a cache memory), at least in a temporary manner, while copying or duplicating the data relating to the second subscription IMSI2.

The phone 14 stores data relating to the second subscription IMSI2 that constitutes a copy of the data relating to the second subscription IMSI 2 which the chip 12 has just switched onto.

The second subscription IMSI2 is also 29 active at the phone side.

Then, the chip 12 is able to identify and preferably authenticate, based on the concerned stored data relating to the second subscription IMSI2, to the second network 110, and more exactly the second server 114.

The chip 12 authenticates successfully, through the phone 14, to the second server 114by using a network authentication key Ki2 (or Ki1) relating to the second subscription IMSI2, as a currently active subscription. To authenticate to the second server 114, the chip 12 exchanges with the second server 114 data 210. The exchanged data 210 may comprise data used for a network authentication process, like e.g. for an LTE authentication process defined in 3GPP 23.401 or e.g. a random originating through or from the second server 114, as a challenge, a corresponding challenge response and a network authentication success or failure.

The chip 12 is able to receive, as an authentication request response, from the second server 114 a result of a network authentication, namely either a success or a failure relating to a network authentication.

Thus, a terminal subscriber to the first operator MNO1 is able to communicate data by using a preferred network access technology that is available and associated with a second subscription IMSI2 relating to the second network 110 operated by the second operator MNO2.

**Figure 3A** shows different data fields that are comprised within an EN (EV D-ATC) command 30 that is provided by the phone 14 to the chip 12.

The EN (EV D-ATC) command 30 is compliant with the ETSI standard. More exactly, the Envelope (Event Download-Access Technology Change) command 30 is specified within the ETSI TS 102.223 V9.0.0 dated on October 2009.

For instance, the Access Technology Tag Length Value (or TLV) is configured as follows, as specified within ETSI TS 102.223 V9.0.0 paragraph 8.61.

| **Byte(s)** | **Description** | **Length** |
|---|---|---|
| 1 | Access Technology tag | 1 |
| 2 | Length (X) of bytes following | 1 |
| 3 | Technology | X |

The Access Technology (or AT) information is thus defined as being coded on one or several bytes.

Thus, the AT information includes an AT tag field, as a first data field 32, and a Length (or L) field, as a second data field 34, that are each coded on one byte.

The AT information also includes a Technology (or T), as a third data field 36, that is coded on X bytes.

**Figure 3B** shows a first predetermined value relating to the T 36, like e.g. '00' 362, when the detected available network access technology is of the 2G type network access technology.

If the first value relating to the T 36 is identified, i.e. after a comparison of the technology value to the value of the (detected) currently available network access technology, then the chip 12 detects a 2G type network access technology, as being the currently available network access technology.

**Figure 3C** shows a second predetermined value relating to the T 36, like e.g. '03' 364, when the detected available network access technology is of the 3G type network access technology.

If the second value relating to the T 36 is identified, i.e. after a comparison of the technology value to the value of the (detected) currently available network access technology, then the chip 12 detects a 3G type network access technology, as being the currently available network access technology.

**Figure 3D** shows a third predetermined value relating to the T 36, like e.g. '08' 366, when the detected available network access technology is of the 3G type network access technology.

If the third value relating to the T 36 is identified, i.e. after a comparison of the technology value to the value of the (detected) currently available network access technology, then the chip 12 detects a 4G type network access technology, as being the currently available network access technology.

The invention solution allows changing, after a subscription switch at the chip 12 and the phone 14, the active subscription according to a network access technology aspect.

Since the chip host device informs, on its (own) initiative, the chip about a currently available network access technology that the chip host device uses (possibly after a network access technology change), a triggering of the subscription switch of the invention solution is very reactive and efficient.

The invention solution thus adds a condition to the available subscription switch technology, so as to switch from a first to a second subscription.

The invention solution does not need to involve a phone user, except for possibly submitting user authentication data, when applicable, so as to allow an authentication to the second network.

The invention solution is therefore transparent to the user, apart from a possible user authentication operation.

The invention solution is compatible with the existing mobile network infrastructure.

The invention solution is preferably secure by authenticating the terminal equipment to the second network and possibly a terminal user, when applicable.

## Claims

1. A method (20) for switching from a first to a second mobile network operator,
**characterized in that,** a device (14) cooperating with a token (12), the token storing a first subscription relating to a first mobile network (100) operator, the token storing at least one second subscription relating, each, to a second mobile network operator, each of the at least one second subscription being associated with a preferred network access technology, the method comprises the following steps:
- the device sends, on an initiative of the device, to the token a first message (22) including a currently available network access technology;
- the token determines, based upon the first message, the currently available network access technology;
- the token compares the currently available network access technology to at least one preferred network access technology;
- if the currently available network access technology matches at least one preferred network access technology relating to a second mobile network (110), then the token switches (25) to a second subscription associated with the preferred network access technology, the second subscription being related to a corresponding second mobile network operator; and
- the token sends to the device at least one identifier (28) relating to the second subscription.

2. Method according to claim 1, wherein the method further includes a step in which the token authenticates successfully to the second mobile network by using a network authentication key relating to the second subscription.

3. Method according to claim 1 or 2, wherein the first message includes an Envelope (EVENT DOWNLOAD-Access Technology Change) type command compliant with ETSI standard.

4. Method according to claim 3, wherein, to detect the currently available network access technology, the method further comprises the following steps:
- the token compares a technology value relating to the Envelope (EVENT DOWNLOAD-Access Technology Change) type command to a predetermined first value relating to a 2G type network access technology;
- if the technology value relating to the Envelope (EVENT DOWNLOAD-Access Technology Change) type command matches the first value relating to a 2G type network access technology, then the currently available network access technology is a 2G type network access technology.

5. Method according to claim 3, wherein, to detect the currently available network access technology, the method further comprises the following steps:
- the token compares the technology value relating to the Envelope (EVENT DOWNLOAD-Access Technology Change) type command to a predetermined second value relating to a 3G type network access technology;
- if the technology value relating to the Envelope (EVENT DOWNLOAD-Access Technology Change) type command matches the second value relating to a 3G type network access technology, then the currently available network access technology is a 3G type network access technology.

6. Method according to claim 3, wherein, to detect the currently available network access technology, the method further comprises the following steps:
- the token compares the technology value relating to the Envelope (EVENT DOWNLOAD-Access Technology Change) type command to a predetermined third value relating to a 4G type network access technology;
- if the technology value relating to the Envelope (EVENT DOWNLOAD-Access Technology Change) type command matches the third value relating to a 4G type network access technology, then the currently available network access technology is a 4G type network access technology.

7. Method according to any of claims 1 to 6, wherein the token sends to the device a request (26) for reading a file relating to the second subscription.

8. Method according to any of claims 1 to 7, wherein the token sends to the device a request (24) for re-initializing the device.

9. A token (12) for switching from a first to a second mobile network operator,
**characterized in that,** the token being likely to cooperate with a device (14), the token comprising means (124) for storing a first subscription relating to a first mobile network (100) operator, the token comprising means for storing at least one second subscription relating, each, to a second mobile network operator, each of the at least one second subscription being associated with a preferred network access technology, the token is configured to:
- receive, on an initiative of the device, a first message (22) including a currently available network access technology;
- determine, based upon the first message, the currently available network access technology;
- compare the currently available network access technology to at least one preferred network access technology;
- switch (25), if the currently available network access technology matches at least one preferred network access technology relating to a second mobile network (110), to a second subscription associated with the preferred network access technology, the second subscription being related to a corresponding second mobile network operator; and
- send to the device at least one identifier (28) relating to the second subscription.

10. A system (10) for switching from a first to a second mobile network operator,
**characterized in that,** the system comprising a device (14) and a token (12), the token cooperating with the device, the token comprising means (124) for storing a first subscription relating to a first mobile network operator, the token comprising means for storing at least one second subscription relating, each, to a second mobile network operator, each of the at least one second subscription being associated with a preferred network access technology, the token is configured to:
- receive, on an initiative of the device, a first message including a currently available network access technology;
- determine, based upon the first message, the currently available network access technology;
- compare the currently available network access technology to at least one preferred network access technology;
- switch (25), if the currently available network access technology matches at least one preferred network access technology relating to a second mobile network (110), to a second subscription associated with the preferred network access technology, the second subscription being related to a corresponding second mobile network operator; and
- send to the device at least one identifier relating to the second subscription.
